Europäisches Patentamt

European Patent Office

Office européen des brevets

(19)

(11) Veröffentlichungsnummer : **0 373 371 B1**

# (12) EUROPÄISCHE PATENTSCHRIFT

(45) Veröffentlichungstag der Patentschrift :
**25.03.92 Patentblatt 92/13**

(51) Int. Cl.$^5$ : **E06B 3/26, B29C 37/00**

(21) Anmeldenummer : **89120971.0**

(22) Anmeldetag : **11.11.89**

(54) **Verfahren und Vorrichtung zur Herstellung von Rahmenprofilelementen für Fenster, Türen od. dgl.**

(30) Priorität : **12.12.88 DE 3841798**
**30.05.89 DE 3917491**

(43) Veröffentlichungstag der Anmeldung :
**20.06.90 Patentblatt 90/25**

(45) Bekanntmachung des Hinweises auf die
Patenterteilung :
**25.03.92 Patentblatt 92/13**

(84) Benannte Vertragsstaaten :
**AT CH DE ES FR GB IT LI NL SE**

(56) Entgegenhaltungen :
**EP-A- 0 223 625**
**DE-A- 3 242 909**
**PATENT ABSTRACTS OF JAPAN, Band 10, Nr.**
**193 (M-496)[2249], 8. Juni 1986; & JP-A-61 37**
**518 (KOJIMA PRESS CO. LTD)**

(73) Patentinhaber : **MASCO INDUSTRIES, INC.**
**21001 Van Born Road**
**Taylor, MI 48180 (US)**

(72) Erfinder : **Paulsen, Hans-Dieter c/o KEIL &**
**SCHAAFHAUSEN**
**Patentanwälte Eyssneckstrasse 31**
**W-6000 Frankfurt am Main 1 (DE)**

(74) Vertreter : **Keil, Rainer A., Dipl.-Phys. Dr. et al**
**KEIL & SCHAAFHAUSEN Patentanwälte**
**Eysseneckstrasse 31**
**W-6000 Frankfurt am Main 1 (DE)**

EP 0 373 371 B1

## Beschreibung

Die Erfindung bezieht sich auf ein Verfahren zur Herstellung von Rahmenprofilelementen für Fenster, Türen od. dgl. aus vorzugsweise einander gegenüberliegende Oberflächenbereiche des Rahmenprofilelementes bildenden, z.B. als Aluminium-, Holz- oder Kunststoffschalen ausgebildeten Metallblech- oder sonstigen Materialprofilen und einem gemeinsam mit diesen durch Aufschäumen- und Erhärtenlassen kraft- und/oder formschlüssig verbundenen massiven Profilkern aus Kunststoffhartschaum, z.B. Polyurethan, bei welchem die Materialprofile in eine z.B. aus Aluminium bestehenden Profilelementproduktionsform eingelegt und nach deren Schließen verbleibende Formhohlräume mit dem Kunststoffhartschaum ausgefüllt werden.

Mehrstoffprofile aus Polyurethanschäumen in Verbindung mit Metallverstärkungen sind bekannt. Hierzu gehören u.a. Fensterprofile sandwichartigen Aufbaus mit äußeren und inneren Deckschichten aus stranggepreßten Aluminiumschalen. Ein solches Rahmenprofilelement für Fenster, Türen od. dgl. ist z.B. aus der DE-PS 32 42 909 bekannt. Die Rahmenprofilelemente werden im allgemeinen in Längen von bis zu etwa sechs Metern hergestellt. Voraussetzung für ihren Einsatz als Fensterprofile sind ihre Verzugsfreiheit in Längs- und Querrichtung.

Bei der Herstellung solcher Rahmenprofilelemente werden bisher die einzelnen Metallblechprofile in eine z.B. aus Aluminium bestehenden Profilelementproduktionsform eingelegt. Die Profilelementproduktionsform wird anschließend geschlossen und die verbleibenden Formhohlräume werden mit Polyurethanschaum ausgefüllt. Im Verlauf des Aufschäum- und Aushärteprozesses gehen der Kunststoffhartschaum und die Metallblechinnenflächen einen form- und kraftschlüssigen Verbund ein. An den eingetrennten, nicht von Metallblechprofilen abgedeckten Wandungen der Profilproduktionsform bilden sich verdichtete Kunststoffrandzonen. Die Kernzone des so gebildeten Profilkerns weist eine geringere Dichte als die Außenzonen auf. Bedingt durch die Reaktion des Kunststoffhartschaums beim Aufschäumen entstehen in der Kernzone des Profilkerns je nach Reaktionsverlauf und Formteilvolumen, Temperaturen zwischen 120°C und 180°C. Beim Abkühlen auf Raumtemperatur entstehen zwangsläufig Eigenspannungen im Rahmenprofilelement, die sich aus der Temperaturdifferenz, dem Reaktionsschwund des Kunststoffes sowie den unterschiedlichen Dehnungskoeffizienten der Metallblechprofile, der Kunststoffrandzonen und der Kunststoffkernzone ergeben. Durch diese beim Abkühlen entstehenden Eigenspannungen verzieht sich das Rahmenprofilelement, wenn die Schwerelinien der einzelnen Materialien nicht zusammenfallen, was die Regel ist. Ähnliche Probleme bestehen bei der Verwendung anderer Materialien für die Oberflächenprofile, wie Holz oder Kunststoff.

Bei der Konzeption von Verbundprofilen ist es üblich, zunächst die gebrauchstechnischen Konstruktionsmerkmale eines derartigen Rahmenprofilelements festzulegen. Im allgemeinen weichen dabei die Schwerelinien des Kunststoffs in den Kern- und/oder den Randzonen von den Schwerelinien der Metallblech- oder sonstigen Materialprofile ab. Die Schwerelinien der Metallblech- oder sonstigen Materialprofile und des Kunststoffhartschaumes müssen dann in umfangreichen Rechenoperationen einander angeglichen werden. Dies geschieht durch die mathematische Simulation größerer Wandstärken an den Metallblech- oder sonstigen Materialprofilen. Stimmen nach einer derartigen mathematischen Simulation die einzelnen Schwerelinien mathematisch überein, werden die Daten konstruktiv umgesetzt. Eine Verzugsfreiheit der Rahmenprofilelemente wird in der Regel durch dickere Metall- oder sonstige Materialwandungen und zusätzliche Stege erreicht. Diese ziehen jedoch einen erhöhten Materialeinsatz und dadurch bedingte erhöhte Produktionskosten nach sich.

Ein weiterer Nachteil bei der zuvor beschriebenen Konzeption bekannter Rahmenprofilelemente besteht darin, daß das einmal ermittelte Schwerelinien gleichgewicht durch unterschiedliche Wandstärkenabweichungen der als Außen- und Innenblenden dienenden verschiedenen Metallblech- oder sonstigen Materialprofile gestört werden kann, was dann wiederum einen Verzug bzw. eine Krümmung des Rahmenprofilelements zur Folge hat. Derartige Abweichungen ergeben sich durch den Werkzeugverschleiß bei der Herstellung der Metallblech- oder sonstigen Materialprofile sowie z.B. bei Aluminiumstrangpreßteilen unvermeidlich.

Weiterhin ist es mit dem bekannten Verfahren nicht möglich, ein oder beide Metallblechprofile ohne Störung des Schwereliniengleichgewichts durch andere Materialien, bspw. andere Metalle, wie Kupfer, oder organische Materialien wie Holz oder Kunststoff zu ersetzen. Der Grund hierfür liegt darin, daß bei anderen Materialien wieder andere Ausdehnungskoeffizienten und möglicherweise andere fertigungsbedingte Wandstärken zu berücksichtigen sind.

Zudem ist es bei dem bekannten Verfahren nicht möglich, Außen- und Innenblenden aus verkanteten oder rollverformten Blechen einzusetzen, da hierbei die Möglichkeit der Verschiebung der Schwerelinie durch Wandstärkenänderung entfällt.

Aufgabe der vorliegenden Erfindung ist es, ein Verfahren der gattungsgemäßen Art zu schaffen, mit welchem Rahmenprofilelemente für Fenster, Türen od. dgl. trotz abweichender Schwerelinien und ohne Rücksicht auf Form und Art der Metallblech- oder sonstigen Materialprofile verzugs- bzw. krümmungsfrei herstellbar sind. Aufgabe der Erfindung ist es ferner, eine einfache Vorrichtung zur Durchführung des erfindungsgemäßen Verfahrens vorzuschlagen.

Diese Aufgabe wird hinsichtlich des Verfahrens erfindungsgemäß im wesentlichen dadurch gelöst, daß die Profilelementproduktionsform während des Produktionsvorgangs in einer dem zu erwartenden Verzug des Rahmenprofilelementes entgegengesetzten Richtung durchgebogen ist. Mit dem erfindungsgemäßen Verfahren ist es auf diese Weise möglich, krümmungsfreie Rahmenprofilelemente aus unterschiedlichen Materialien auch mit abweichenden Schwerelinien herzustellen. Es entfallen aufwendige mathematische Operationen und Simulationen um ein Schwerelininiengleichgewicht herzustellen. Die erforderliche Durchbiegung kann einfach empirisch ermittelt werden. Das Verfahren ist ferner unabhängig von dem Material der Oberflächenprofile und unabhängig von etwaigen Wandabweichungen. Es können daher bspw. auch gewalzte, sollverformte Bleche eingesetzt werden.

Die Erfindung bezieht sich auch auf eine Vorrichtung zur Durchführung des erfindungsgemäßen Verfahrens. Bei dieser ist die Profilelementproduktionsform durch Krafteinwirkung günstigerweise in ihrer Mitte durchbiegbar, da an dieser Stelle der maximale Verzug zu erwarten ist. Das Maß der Durchbiegung ist dadurch wirksam einstellbar.

Um die Profilelementproduktionsform in einfacher Weise durch Krafteinwirkung in ihrer Mitte in dem gewünschten Sinne und Maß durchzubiegen, ist sie vorzugsweise an ihren Enden drehbar aber unverschieblich gelagert.

Zu diesem Zwecke kann beispielsweise die Profilelementproduktionsform mittels einer Durchbiegeeinrichtung durchbiegbar sein. Dazu könnten bspw. eine Kolben-Zylinder-Einheit oder Schraubspindeln verwendet werden.

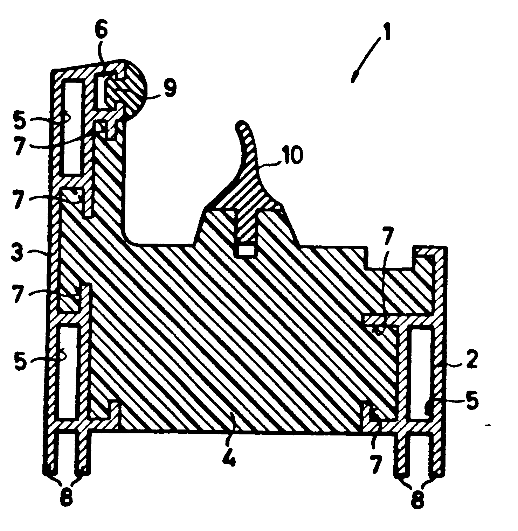

Weitere Ziele, Merkmale, Vorteile und Anwendungsmöglichkeiten der vorliegenden Erfindung ergeben sich aus der nachfolgenden Beschreibung von Ausführungsbeispielen anhand der beiliegenden Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Die einzige Figur zeigt ein Rahmenprofilelement hergestellt nach dem erfindungsgemäßen Verfahren am Beispiel der Verwendung von Metallblechprofilen als Oberflächenblenden.

Das in der Zeichnung dargestellte Rahmenprofilelement 1 besteht aus zwei Metallblechprofilen 2, 3 und einem Profilkern 4 aus geschäumtem Polyurethan. Zur Verankerung an dem Profilkern 4 weisen die Metallblechprofile 2, 3 mehrere Hinterschneidungen 7 auf. Für die Verankerung eines derartigen Rahmenprofilelementes 1 im Mauerwerk weisen die Metallblechprofile 2, 3 Verlängerungen 8 auf.

Aufgrund der geringeren Höhe des einen Metallblechprofils 2 weist das Rahmenprofilelement 1 in diesem Ausführungsbeispiel eine Winkelform auf. Das in seiner Höhe größere Metallblechprofil 3 ist an seinem oberen Ende mit einer Dichtungsnut 6 zur Aufnahme einer Dichtleiste 9 versehen. In seinem mittleren Seitenbereich trägt der Profilkern 4 ebenfalls eine Dichtleiste 10. Das Rahmenprofilelement 1 ist ferner mit verschiedenen in den Metallblechprofilen 2, 3 liegenden Hohlkammern 5 zur Aufnahme von Eckwinkelverbindern versehen. Die Hohlkammern 5 sind nicht mit Polyurethan ausgeschäumt.

Zur Herstellung von Rahmenprofilelementen 1 für Fenster, Türen od. dgl. nach dem erfindungsgemäßen Verfahren wird mittels einer Durchbiegeeinrichtung die Profilelementproduktionsform in der dem zu erwartenden Verzug entgegengesetzten Richtung durchgebogen. Dazu ist die Profilelementproduktionsform derart an ihren Enden drehbar gelagert, daß sie mittels einer in der Mitte der Profilproduktionsform einwirkenden Kraft zur Kompensation der zu erwartenden Zugspannungen durchgebogen werden kann. Die Profilelementproduktionsform ist zu diesem Zweck an ihren Enden jeweils dreh- aber nicht verschiebbar befestigt. Die Durchbiegeeinrichtung kann z.B. aus einer Kolben-Zylin der-Einheit oder Schraubspindeln bestehen. Das Verfahren sowie die Vorrichtung sind jedoch nicht an eine derartige Einheit gebunden. Die Erfindung bezieht sich auf jegliche Einrichtungen, mit denen eine Durchbiegung der Profilelementproduktionsform erzielt werden kann.

In die auf ca. 50 - 60°C temperierte Profilelementproduktionsform, die z.B. aus Aluminium besteht, werden die Metallblechprofile 2, 3 eingelegt. Die Metallblechprofile 2, 3 sind in diesem Ausführungsbeispiel als Aluminiumschalen ausgebildet, es können aber auch einfache gewalzte Bleche sein. Nach dem Verschließen der die Metallblechprofile 2, 3 aufnehmenden Profilelementproduktionsform werden die verbliebenen Formhohlräume mit einem Kunststoffhartschaum ausgeschäumt, der anschließend aushärtet. Im Verlaufe des Aushärtens gehen Kunststoff und Aluminiumschalungsflächen einen form- und kraftschlüssigen Verbund ein. An den nicht von Aluminiumschalen abgedeckten Seitenwandungen der Formen bilden sich kompakte Kunststoffrandzonen. Im dargestellten Fall wird als Kunststoffhartschaum Polyurethan verwendet. Der Kern hat dadurch eine geringere Dichte als die Blenden.

Die durch das Aushärten des Kunststoffhartschaums entstehende Krümmung und die zur Beseitigung dieser Krümmung notwendige Durchbiegung der Profilelementproduktionsform wird seitens des Herstellungsbetriebs empirisch ermittelt. Dementsprechend ist die Profilelementproduktionsform während des Produktionsprozesses in der Mitte durchgebogen. Nach dem Aushärten des Kunststoffmaterials wird die Profilelementproduktionsform geöffnet und das Rahmenprofilelement 1 entnommen. Das noch heiße und gekrümmte Rahmenprofilelement zieht sich nun beim Abkühlen gerade.

Bezugszeichenliste:

1 Rahmenprofilelement
2 Metallblechprofil
3 Metallblechprofil
4 Profilkern
5 Hohlkammer
6 Dichtungsnut
7 Hinterschneidungen
8 Verlängerungen
9 Dichtleiste
10 Dichtleiste

**Patentansprüche**

1. Verfahren zur Herstellung von Rahmenprofilelementen für Fenster, Türen od. dgl. aus vorzugsweise einander gegenüberliegende Oberflächenbereiche des Rahmenprofilelementes bildenden, z.B. als Aluminium-, Holz- oder Kunststoffschalen ausgebildeten Metallblech- oder sonstigen Materialprofilen und einem gemeinsam mit diesen durch Aufschäumen- und Aushärtenlassen kraft- und/oder formschlüssig verbundenen massiven Profilkern aus Kunststoffhartschaum, z.B. Polyurethan, bei welchem die Materialprofile in eine z.B. aus Aluminium bestehenden Profilelementproduktionsform eingelegt und nach deren Schließen die verbleibenden Formhohlräume mit dem Kunststoffhartschaum ausgefüllt werden, dadurch gekennzeichnet, daß die Profilelementproduktionsform während des Produktionsvorganges in einer dem zu erwartenden Verzug des Rahmenprofilelementes (1) entgegengesetzten Richtung durchgebogen ist.

2. Vorrichtung zur Durchführung des Verfahrens nach Anspruch 1, dadurch gekennzeichnet, daß die Profilelementproduktionsform durch Krafteinwirkung in deren Mitte durchbiegbar ist.

3. Vorrichtung nach Anspruch 2, dadurch gekennzeichnet, daß die Profilelementproduktionsform an ihren Enden drehbar aber unverschieblich gelagert ist.

4. Vorrichtung nach Anspruch 2 oder 3, gekennzeichnet durch eine die Durchbiegung der Profilelementproduktionsform erzeugende Durchbiegeeinrichtung, vorzugsweise eine Kolben-Zylinder-Einheit oder Schraubspindeln.

**Claims**

1. Process for the manufacture of frame profile elements for windows, doors or the like from sheet metal or other material shapes designed, for example, as aluminium, wood or plastic shells and forming preferably opposing surface areas of the frame profile element, and a common solid profile core that forms a positive and/or non-positive connection with said material shapes by means of foaming and curing and is made of a rigid plastic foam such as polyurethane, in which process the material shapes are embedded in a profile element production mould made, for example, of aluminium and the mould cavities that remain following their closure are filled with a riigid plastic foam, wherein during the production process the profile element production mould is bent in a direction opposite the expected warping of the frame profile element (1).

2. Device to carry out the process, as claimed in claim 1, wherein the profile element production mould can be bent in the center through the influence of the forces.

3. Device, as claimed in claim 2, wherein the ends of the profile element production mould can be rotated or displaced.

4. Device, as claimed in claim 2 or 3, wherein there is a bending device - preferably a piston cylinder unit or screw spindles - that produces the bending of the profile element production mould.

**Revendications**

1. Procédé de fabrication d'éléments profilés de cadre pour des fenêtres, des portes ou analogues composés de profilés en tôles métalliques ou en matériau autre qui se présentent sous la forme par exemple de coquilles en aluminium, en bois ou en matière plastique et qui forment des parties superficielles de l'élément profilé massif en mousse dure de matière plastique, par exemple de polyuréthane, qui est lié à ceux-ci par adhérence et/ou par conjugaison de forme, par moussage et par durcissement consécutif, selon lequel on place les profilés dans un moule de production d'éléments profilés, par exemple en aluminium et, aprés fermeture de celui-ci, on remplit les cavités qui subsistent dans le moule à l'aide de la mousse dure de matière plastique, caractérisé en ce qu'on met le moule de production de profilés en flexion dans une direction opposée à la déformation attendue de l'élément profilé de cadre (1) au cours du processus de fabrication.

2. Dispositif pour la mise en oeuvre du procédé selon la revendication 1, caractérisé en ce que le moule de production de profilés peut-être mis en flexion par application d'une force en son milieu.

3. Dispositif selon la revendication 2, caractérisée en ce que le moule de production de profilés est monté mobile en rotation à ses extrémités, mais est fixe en translation.

4. Dispositif selon la revendication 2 ou 3, caractérisé par un dispositif fléchisseur produisant la flexion du moule de production de profilés, de préférence un système piston-cylindre ou un système à vis.